# EUROPEAN PATENT APPLICATION

(11) **EP 2 801 464 A1**
(43) Date of publication of application: **12.11.2014**
(21) Application number: 14166926.7
(22) Date of filing: 02.05.2014
(51) Int. Cl.: B29C 44/56, B32B 5/18, B32B 5/22, B32B 5/30, B32B 5/32, A47C 27/00

(54) **Mattress Materials**

(30) Priority: 03.05.2013 GB 201308066
(71) Applicant: CARPENTER CO., Richmond, VA 23230 (US)
(72) Inventor: Poetzsch, Rolf, 8800 Roeselare (BE); Triouleyre, Sebastien, 8800 Roeselare (BE)
(74) Representative: Phillips & Leigh

(57) **Abstract**

Disclosed is a method of incorporating a characteristic modifying, particulate material with the surface (12) of a foam body (10) comprising bonding a layer (14) of particulate material to the foam material surface; the incorporating step may comprise either mixing the characteristic modifying particulate material with an adhesive and dispensing the mixture onto the foam body surface (12) to form the particulate layer (14) or coating the foam body surface (12) with adhesive and dispensing particulate material onto the adhesive coated foam body surface to form the particulate layer (14): the particulate may be bead material including phase change material, expanded polystyrene, gel particle, expandable graphite; polymer beads or particles; flame retardants; recycled materials: a layer (28) of foam material may be applied to the particulate layer (14) to form a foam body(10)/particulate layer(14)/foam layer composite (28).

## Description

This invention relates to materials for making mattresses, toppers, pillows and the like products and in particularly relates to a method for incorporating particles with one or more foam layer surfaces of foam bodies from which mattresses, toppers, pillows and the like products are produced.

### Background

The incorporation of particulates onto or into mattress foam bodies to modify the characteristics of the foam material has long been known in the foam industry. The modifying particulates can take the form of a particulate layer on the surface of a foam body or particles incorporated throughout the foam body or in surface layers thereof. The characteristics to be modified include fire resilience, fire resistance, heat transfer, heat regulation, resilience, support and visual appearance.

### Prior Art

Document DE 10 2008 016 974-A1 (9 April 2009) ROSSIE & WANNER discloses non-slip coatings for mattresses particularly screen printing studs of elastomeric material onto an air-permeable textile base structure.

Document WO 2013/041894-A1 (28 March 2013) GAALHAB discloses a method for manufacturing a foam coating, in the course of which an object is at least partially covered with base adhesive, and foam pieces (22) are fixed to a surface of the object covered with a base adhesive; such as hot melt or solvent-based.

Document US 5,955,188-A (21 September 1999) PUSHAW discloses a composition for saturation of preformed, previously cured foam substrates having an at least partially open cell configuration, includes a polymer binder in which micro-spheres containing a phase change material are dispersed. One method is by applying a binder/microsphere dispersion to the upper surface of a previously cured foam sheet with, then drawing a vacuum from the underside of the cured foam sheet to permeate from 20% to 100% of the cured foam sheet with the binder/microsphere dispersion. An alternative method is using a knife over roll technique to an exposed surface of the skived foam.

Document EP 2 336 223-A1 (22 June 2011) RECTICEL discloses a process for the preparation of a flexible polyurethane foam which is prepared by allowing a reaction mixture, which comprises a blowing agent, to foam. In order to influence the physical and/or thermophysiological properties of the foam, in particular the pressure distribution properties, at least one organogel material is dispersed in the reaction mixture before allowing it to foam.

Document GB 1 270 352-A1 (12 April 1969) DOW discloses polyol compositions and in particular to compositions comprising liquid polyether polyols and thermally expandable organic polymer, for example, styrene polymer, particles for use as the polyol ingredient in polyurethane formulations or recipes for making composite cellular materials comprising bodies of a cellular polymer dispersed throughout a polyurethane foam matrix.

Documents WO 2006/100558-A1 (28 September 2006) TECHNOGEL ITALIA; US 2001/0018466-A1 (30 August 2001) GANSEN et al; US 2005/0017396-A1 (27January 2005) PEARCE et al disclose mattress or mattress toppers comprising polyurethane gel layers overlying foam layers.

Document WO 01/32791-A1 (10 May 2001) HUNTSMAN discloses incorporating a gel material in a polyurethane coating material to improve the insulating properties thereof.

### STATEMENT OF INVENTION

The Present Invention is defined in the appended claims.

### SUMMARY OF INVENTION

None of the above-referenced documents disclose incorporating a characteristic modifying, particulate material with a foam layer surface of a foam body and bonding the particulate material to the foam material surface.

The foam body can be:
- used for the manufacture of mattress, toppers, pillows and the like;
- complex, comprising one of more foam layers bonded together; and,
- foam layer surfaces can have complex, non-planar surfaces.

Criteria for the characteristic modifying particulate include that it should:
- provide a desired modification to the characteristics of the foam;
- be suitable for bonding;
- be of a size or consistency to be sprayable or roll-coatable; preferably using existing, conventional spray or roll-coater apparatus;
- be compatible with foams and any other particulates constituting the foam body

By way of example, the characteristic modifying particulates can be:
- particles of phase change material to modify heat flow characteristics of flexible foams;
- polymer beads to modify support and resilience characteristics of flexible foam; including, but not limited to, polyurethane, high resilience or visco-elastic foam.

Advantages of the present invention include:
- it is a simple process;
- it employs existing machinery;
- it can use all kinds of compatible flexible foams and adhesives;
- it is a flexible process;
- it can use known materials;
- it can use flexible foam with complex shapes such as holes, waves, channels, spikes or other uneven surfaces.

### BRIEF DESCRIPTION OF THE DRAWINGS

- Fig. 1: is a perspective view of a foam body partially sprayed in accordance with a first embodiment of the present invention;
- Fig. 2: is a perspective view of a modified foam body sprayed in accordance with a first embodiment of the present invention;
- Fig. 3: is a perspective view of a foam body prior to being sprayed in accordance with a first embodiment of the present invention;
- Fig. 4: is a close-up view of the surface of a foam body sprayed in accordance with a first embodiment of the present invention;
- Fig. 5: is a close-up side view of part of a foam body in accordance with a second embodiment of the present invention; and,
- Fig. 6: is a side-elevation of a complex foam body in accordance with a third embodiment.

### DETAILED DESCRIPTION

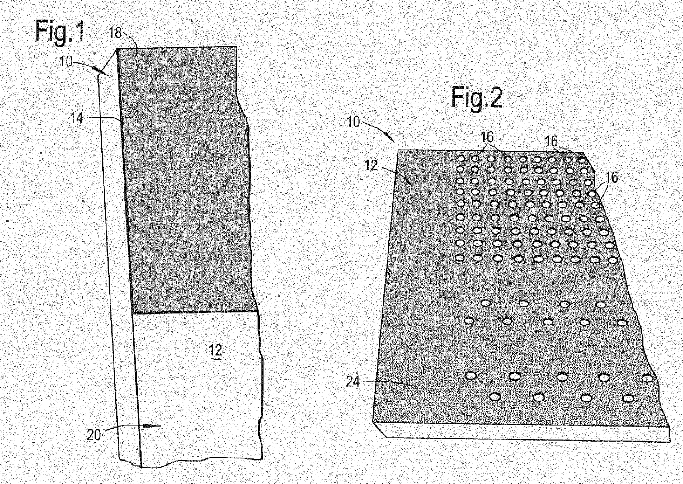

As shown by Figs 1 and 2, a first embodiment comprises a body 10 of foamed polyurethane material having a surface 12 with a sprayed coating 14 formed by spraying a mixture of phase change material particulates, a dye and an adhesive.

### EXAMPLE 1

| **MATERIAL** | **TYPE** | **SOURCE** | **PROPORTION 1^{st} formulation** | **PROPORTION 2^{nd} formulation** |
|---|---|---|---|---|
| FOAM | VISCO-ELASTIC | CARPENTER VG8370,or VE52018,or HR35035,or RP24040 | Substrate | Substrate |
| Coating Component 1 | Microspheres of Phase Change Material | BASF LURAPRET Confort | 30% by weight of the coating | 8% by weight of the coating |
| Coating Component 2 | Pigment | Blue Pigment ISL-Chemie SA-20746/5111 | 1% by weight of the coating | 1% by weight of the coating |
| Coating Component 3 | WATER-BASED LATEXT | Collano-Aqualine PSA 1623 | 69% by weight of the coating | 91 % by weight of the coating |

In the Example, the above-listed components were mixed in the given proportions and sprayed onto the foam surface 12, using a pressure tank and a pressure feed spray gun. The coating 14 was some 0.1 mm thick.

Figure 1 illustrates a part-coated foam body 10; for some foams and applications airflow can be provided/improved by ventilation holes or ducts 16. For example, the holes or ducts can be cut through the thickness of the body to emerge at the foam surface 12. As can be seen there are two patterns of holes, one pattern 22 having more holes 16 and a higher airflow than the other pattern 24 having fewer holes 16 and a lower airflow.

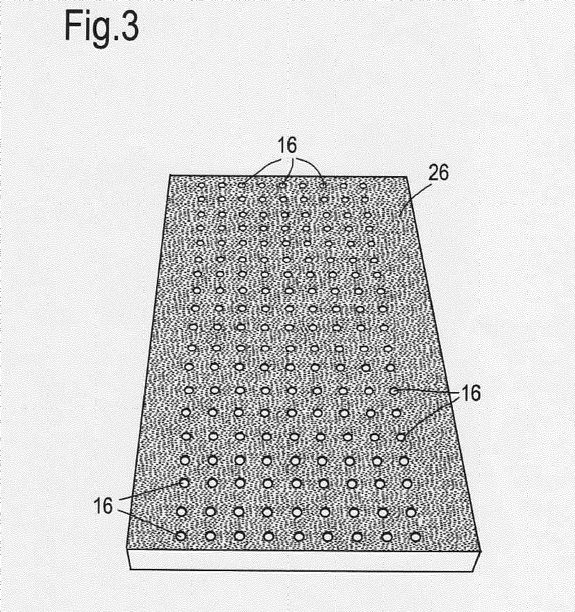

In the alternative and as shown by Figure 3, a foam body 26 may be provided with ventilation holes or ducts 16 prior to a coating 14 being sprayed.

Alternative, particulate materials include phase change materials, expanded polystyrene, gel particles, expandable graphite, polymer beads or particles, flame retardants, recycled materials.

Alternative adhesive materials include water-based adhesives and solvent-based adhesives; EVA latex, urethane latex, neoprene latex, SBR latex, acrylonitrile butadiene styrene latex, acrylic polymers latex, polyvinyl acetate and natural latex.

The adhesion can be mechanical, chemical, dispersive, electrostatic or diffusive.

Alternative dispensing methods include knifing, roll-coating, kiss-coating, dot screen printing, flat die system, rotary screen printing. These or other dispensing methods maybe used, depending on the nature and especially the viscosity of the mixed coating components. Some of these alternative methods are not limited by particulate size.

A colour or dye may be mixed with the adhesive, so that the dispersed particulate coating 14 is visible as a line in the sides of the body.

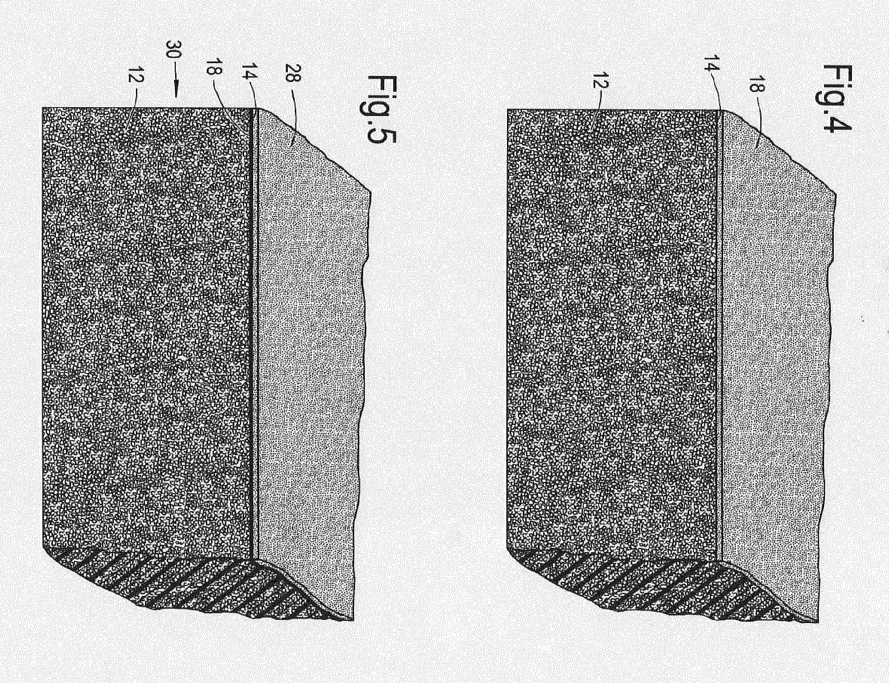

In a second embodiment, as shown by Fig. 5, a second foam layer 28 is applied to a particulate-adhesive layer 14 coating on the surface of a first foam layer 12. Preferably, the second foam layer 28 is applied before the adhesive sets or cures so that the second foam layer adheres to the particulate-adhesive layer and forms a composite foam body 30; comprising first foam layer 12/particulate layer 14/second foam layer 28. The thickness of the second foam layer can be adjusted depending on the desired characteristics of the end product, the composite foam body 30; in the example the second foam layer 28 has a thickness of 4mm. The second foam layer can, for example, be of any of the foams described above; depending on the function which the complex foam body 30 is to exhibit. For example; it can be to protect the particulate layer, to enhance the visual appearance of the composite or, when phase change microspheres are used, to insulate the particulate layer and obviate or minimise the cold feel of phase change materials.

The composite body may comprise multiple layers of, possibly differing, foam material and particulate layers of the same, different or mixtures of more than one type of particulate material; all depending upon the desired characteristics of the complex foam body.

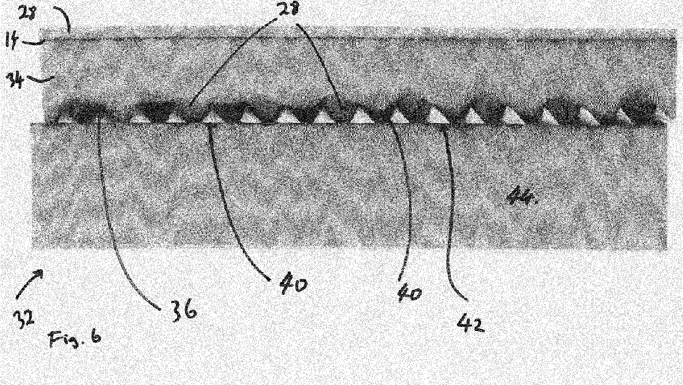

In a third embodiment, as shown by Fig. 6, a second foam layer 28 is applied to a particulate-adhesive layer 14 coating on the upper surface of a first foam layer 34. The lower surface 36 of the first foam layer 34 has a convoluted shape, in the example a regular array of cones 38. A particulate-adhesive layer 40 is dispensed to coat the first foam lower surface 36. A particulate-adhesive layer 40 is also dispensed to coat the upper surface 42 of a third foam layer 44. The coated third foam layer 44 upper surface 42 is applied to the coated first foam layer 34 lower surface 36 to bond the first and third layers together and form a composite foam body 32; comprising third foam layer 44/particulate layer 40/first foam layer 34/particulate layer 14/second foam layer 28. Preferably, the second foam layer 28 and third layer 44 are applied before the adhesive sets or cures.

The formed foam bodies provide the stock from which mattresses, toppers, pillows and the like products can be produced.

The first formulation of Example I was found to contain lumps due to the concentration of phase change material. It was discovered that preferable suitable coating formulations without lumps could be achieved with a decreased portion of phase change material. The preferable range for phase change material is 4-30% by weight of the coating. The most preferred formulation is given as the second formulation of Example I.

## Claims

1. A method of incorporating a characteristic modifying, particulate material with at least one foam layer surface (12) of a foam body (10); comprising bonding a layer (14) of particulate material to the foam layer surface.

2. A method as claimed in claim 1, wherein incorporating comprises the steps of:-
i) mixing the characteristic modifying particulate material with an adhesive; and,
ii) dispensing the mixture onto the foam layer surface (12) to form the particulate layer (14); or
iii) coating the foam layer surface (12) with adhesive; and,
iv) dispensing particulate material onto the adhesive-coated foam layer surface to form the particulate layer (14).

3. A method as claimed in claim 2, wherein the mixture or adhesive is dispensed by spraying, roll-coating, kiss coating, dot screen printing, flat die system or rotary screen printing.

4. A method as claimed in any of claims 1 to 3, wherein the characteristic modifying particulate material is bead.

5. A method as claimed in any of claims 1 to 4, wherein the particulate material includes phase change, expanded polystyrene, gel particle, expandable graphite, polymer, flame retardants or recycled materials.

6. A method as claimed in any of claims 1 to 5, wherein characteristics to be modified include fire resilience, fire resistance, heat transfer, resilience, support or visual appearance.

7. A method as claimed in any of claims 1 to 6, wherein the adhesive material includes: is a water-based glue, EVA latex, urethane latex, neoprene latex, SBR latex or natural latex.

8. A method as claimed in any of claims 1 to 7, wherein a second layer of foam material (28) is applied to the particulate layer (14) to form a composite foam body (30); comprising a first foam layer (12), the particulate layer 14 and the second foam layer (28).

9. A method as claimed in claim 8, wherein the second foam layer (28) is applied to the particulate layer (14) before the adhesive cures, to bond the second foam layer (28) to the particulate layer (14) and to the first foam layer (12).

10. A method as claimed in claim 8 or claim 9, wherein a further particulate layer (40) is dispensed to a lower surface (36) of a first foam layer (34) and third foam layer (44) is applied to the particulate layer to form a composite body (32) comprising third foam layer (44)/particulate layer (40)/first foam layer (34)/particulate layer (14)/second foam layer (28).

11. A method as claimed in any of claims 8 to 10, at least one of the foam layers (12, 28, 34,44) is of flexible foam material.

12. A method as claimed in claim 11, wherein the flexible foam material is a polyurethane.

13. A method as claimed in claim 12, wherein the flexible polyurethane is a high resilience or a visco-elastic memory foam.

14. A method as claimed in any of claims 1 to 13 comprising the further step of providing air-circulating perforations or ducts (16) in the foam body (10,30,32) prior to or following particulate layer formation.

15. A foam body (10,30,32) having a characteristic particulate material (14) incorporated with a foam layer surface (12,36,42) thereof by the method of any of claims 1 to 14.
